# EUROPÄISCHE PATENTANMELDUNG

(11) **EP 4 428 429 A1**
(43) Veröffentlichungstag der Anmeldung: **11.09.2024**
(21) Anmeldenummer: 23020118.8
(22) Anmeldetag: 10.03.2023
(51) Int. Cl.: F17C 5/06

(54) **VERFAHREN UND ANLAGE ZUM BEREITSTELLEN VON MEDIUM**

(71) Anmelder: Linde GmbH, 82049 Pullach (DE)
(72) Erfinder: Schäfer, Simon, 82049 Pullach (DE); Westermeier, Michael, 82049 Pullach (DE); Janzen, Andreas, 82049 Pullach (DE); Beck, Bernhard, 82049 Pullach (DE); Balla, Anton, 82049 Pullach (DE); Csar, Michael, 82049 Pullach (DE); Hartmann, Tanja, 82049 Pullach (DE)
(74) Vertreter: Zahn, Christoph

(57) **Zusammenfassung**

Die Erfindung betrifft ein Verfahren zum Bereitstellen eines Mediums (M), insbesondere Wasserstoff, wobei das Medium (M) aus einer ersten Medienspeichereinrichtung (111) über mehrere Versorgungspfade (120.1, 120.2) einer zweiten Medienspeichereinrichtung (112) zugeführt wird, wobei das Medium (M) aus der zweiten Medienspeichereinrichtung (112) einem oder mehreren Dispensern (140.1, 140.2) zur Bereitstellung des Mediums, insbesondere zur Betankung eines Fahrzeugs (190.1, 190.2), zugeführt wird, wobei in jedem der mehreren Versorgungspfade jeweils mittels einer Fördereinheit (121.1, 121.2) Medium aus der ersten Medienspeichereinrichtung (11) über einen jeweiligen ersten Wärmetauscher (131.1, 131.2) der zweiten Medienspeichereinrichtung (112) zugeführt wird, und wobei über eine gemeinsame erste Kühlmittelspeichereinrichtung (151) jeder der ersten Wärmetauscher (131.1, 131.2) mit einem ersten, insbesondere flüssigen, Kühlmedium (K1) versorgt wird. Die Erfindung betrifft auch eine Anlage (100) hierfür sowie deren Verwendung.

## Beschreibung

Die Erfindung betrifft ein Verfahren zum Bereitstellen eines Mediums, insbesondere Wasserstoff, und dort insbesondere das Wärmemanagement. Die Erfindung betrifft auch eine entsprechende Anlage, insbesondere eine Wasserstofftankstelle, sowie eine Verwendung einer solchen Anlage.

Wasserstoff, der z.B. als Treibstoff für Fahrzeuge verwendet wird, kann über sog. Wasserstofftankstellen bereitgestellt werden. Bei einer Wasserstofftankstelle können typischerweise zwei Systembereiche unterschieden werden. Der erste Systembereich betrifft die Verdichtung des Wasserstoffes, dessen Speicherung sowie dessen Konditionierung und Kühlung. Der zweite Systembereich umfasst einen Dispenser und das dazugehörige Betankungsequipment wie beispielsweise Abreiß- und Betankungskupplung sowie den Betankungsschlauch.

Eine besondere Herausforderung bei einer solchen Wasserstofftankstelle, oder auch anderen Anlagen zur Bereitstellung von Medien, ist häufig das Wärmemanagement.

### Offenbarung der Erfindung

Diese Aufgabe wird durch ein Verfahren und eine Anlage zum Bereitstellen eines Mediums, sowie eine Verwendung der Anlage mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit dem Bereitstellen eines Mediums, insbesondere Wasserstoff, wie dies z.B. an Wasserstofftankstellen der Fall ist. Nachfolgend sollen ein Verfahren und eine Anlage zur Bereitstellung eines Mediums übergreifend beschrieben werden. Dabei soll die Erfindung auch vorwiegend in Bezug auf Wasserstoff als medium am Beispiel einer Wasserstofftankstelle beschrieben werden. Es sei jedoch erwähnt, dass das Verfahren und die Anlage auch für anderen Medien, insbesondere Gase bzw. (zunächst) verflüssigte Gase gelten. Hier kommen z.B. Sauerstoff oder Stickstoff in Betracht, insbesondere deren Temperierung bei weiterer Nutzung der abgegebenen Wärmenergie.

Ein grundlegender Aufbau einer solchen Anlage ist derart, dass die Anlage eine erste Medienspeichereinrichtung, z.B. einen Speichertank für verflüssigtes Medium bzw. Wasserstoff, eine zweite Medienspeichereinrichtung, z.B. einen oder mehrere Hochdruckspeicher, und einen Dispenser aufweist. Es kann dann eine Fördereinheit wie z.B. eine Pumpe, insbesondere eine Kryopumpe, vorgesehen sein, mittels welcher das Medium aus der ersten Medienspeichereinrichtung der zweiten Medienspeichereinrichtung zugeführt wird. Von dort kann das Medium dann dem Dispenser zugeführt werden, um das Medium bzw. den Wasserstoff z.B. im Rahmen eines Betankungsvorgangs an ein Fahrzeug (oder einen sonstigen Verbraucher) abzugeben.

Wie schon erwähnt, ist das Wärmemanagement (oder Thermomanagement) für eine solche Anlage bzw. deren Betrieb ein wichtiger Punkt, insbesondere auch, um die Anlage möglichst effizient und energiesparend betreiben zu können. Das Wärmemanagement sorgt z.B. dafür, dass das Medium, z.B. der komprimierte Wasserstoff, mit einer kontrollierten Temperatur von z.B. bis zu -40 °C in die Fahrzeuge eingespeist werden kann. Außerdem kann im Rahmen des Wärmemanagements eine Kühlung verschiedener Komponenten erfolgen. Die benötigte Kühlleistung wird dabei insbesondere aus dem Medium bzw. Wasserstoff selbst zurückgewonnen.

Wasserstoff wird in der ersten Medienspeichereinrichtung in der Regel flüssig bei einem Druck von ca. 3 bar gespeichert. Bei diesen Bedingungen hat der Wasserstoff jedoch eine sehr niedrige Temperatur von z.B. ca. -253 °C. Bei anderen Medien als Wasserstoff können die genauen Bedingungen wie Temperatur und Druck auch anders sein. Vor der Pufferung in der zweiten Medienspeichereinrichtung muss das Medium bzw. der Wasserstoff also in der Regel zunächst auf eine höhere Temperatur, z.B. Raumtemperatur, erwärmt werden. Hierzu können ein erster Wärmetauscher (oder Wärmeübertrager), vorzugsweise auch ein zweiter Wärmetauscher vorgesehen sein, über die das Medium bzw. der Wasserstoff mittels der Fördereinheit aus der ersten Medienspeichereinrichtung der zweiten Medienspeichereinrichtung zugeführt wird.

Im ersten Wärmetauscher wird das Medium mittels eines ersten Kühlmittels aus einer ersten Kühlmittelspeichereinrichtung (z.B. einem Kühlmittelbehälter, einem sog. kalten Kühlmittelbehälter) erwärmt, im Falle von Wasserstoff z.B. auf ca. -90°C. Beim Durchströmen des ersten Wärmetauschers kühlt das erste Kühlmittel dann in diesem Fall z.B. auf ca. -43 °C ab und gewinnt so die kalte Wärmeenergie des Wasserstoffs für die weitere interne Nutzung zurück. Im zweiten Wärmetauscher wird das Medium mittels eines zweiten Kühlmittels aus einer zweiten Kühlmittelspeichereinrichtung (z.B. einem Kühlmittelbehälter, einem sog. warmen Kühlmittelbehälter) erwärmt, im Falle von Wasserstoff z.B. auf Raumtemperatur. Dabei wird weitere kalte Wärmeenergie zurückgewonnen, so dass die zweite Kühlmittelspeichereinrichtung z.B. auf ca. 20 °C gehalten werden kann. Das zweite (bzw. warme) Kühlmittel kann im Prozess weiterverwendet werden, um Komponenten wie die Fördereinheit, z.B. die beispielsweise elektrisch oder hydraulisch angetriebene Pumpe oder Kryopumpe (Kompressor) zu kühlen. Das erste (bzw. kalte) Kühlmittel kann verwendet werden, um den dann warmen komprimierten Wasserstoff (bzw. ein anderes Medium) aus der zweiten Medienspeichereinrichtung im Dispenser (bzw. einer Zapfsäule bei der Fahrzeugbetankung) zu kühlen. Hierzu kann ein Dispenser-Wärmetauscher vorgesehen sein, z.B. als Teil des Dispensers.

Die Verbindung der verschiedenen Medienströme und die daraus resultierende Rückgewinnung der kalten Wärmeenergie ermöglicht einen hohen thermischen Gesamtwirkungsgrad. Außerdem entfällt die Notwendigkeit der Installation einer zusätzlichen Kältemaschine zur Abkühlung des warmen Wasserstoffs auf die gewünschte Betankungstemperatur an der Zapfsäule. Dies erhöht den Gesamtwirkungsgrad der Anlage, da der Stromverbrauch reduziert wird.

Die Verwendung nur eines Dispensers und nur einer Pumpe in der Anlage erlaubt allerdings nur einen begrenzten Durchsatz an Medium. Um also z.B. die Durchsatzleistung einer solchen Anlage (z.B. Wasserstofftankstelle) zu erhöhen, können mehrere Fördereinheiten verwenden werden, um das Medium aus der ersten Medienspeichereinrichtung der zweiten Medienspeichereinrichtung zuzuführen. Hierzu können mehrere Versorgungspfade mit jeweils einer der mehreren Fördereinheiten vorgesehen sein. Außerdem können anstelle nur eines auch mehrere Dispenser vorgesehen werden, die insbesondere bei mehreren Versorgungspfaden dann auch ausreichend versorgt werden können.

Dabei handelt es sich dann also um ein mehrfaches, parallel betriebenes Verdichtungssystem, das eine hohe Verfügbarkeit sowie eine hohe Flexibilität erlaubt. Das vorstehend beschriebene Wärmemanagementsystem ist allerdings auf eine einzelne Fördereinheit zugeschnitten; eine einfache mehrfache Verwendung des beschriebenen Wärmemanagements für jeden der mehreren Versorgungspfade erlaubt dann zwar grundsätzlich den Betrieb der Anlage, erlaubt jedoch Raum für Verbesserungen in der Effizienz, und kann auch zu gewissen Problemen führen.

Vor diesem Hintergrund wird vorgeschlagen, dass zwar für jeden der mehreren Versorgungspfade zwar eine Fördereinheit wie z.B. eine Pumpe (z.B. eine Kryopumpe oder einen Kompressor) und ein erster Wärmetauscher, in einer Ausführungsform auch ein zweiter Wärmetauscher, vorgesehen werden. Jedoch wird für die mehreren Versorgungspfade (nur) eine gemeinsame erste Kühlmittelspeichereinrichtung mit einem ersten Kühlmedium vorgesehen, wobei über die erste Kühlmittelspeichereinrichtung jeder der ersten Wärmetauscher mit dem ersten Kühlmedium versorgt wird. Im Falle zweiter Wärmetauscher wird für die mehreren Versorgungspfade weiterhin (nur) eine gemeinsame zweite Kühlmittelspeichereinrichtung mit einem zweiten Kühlmedium vorgesehen, wobei über die zweite Kühlmittelspeichereinrichtung jeder der zweiten Wärmetauscher mit dem zweiten Kühlmedium versorgt wird.

Über die erste Kühlmittelspeichereinrichtung kann dann weiterhin der eine oder jeder der mehreren Dispenser-Wärmetauscher mit dem ersten Kühlmedium versorgt werden. Das zweite Kühlmedium aus der zweiten Kühleinrichtung kann weiterhin zum Kühlen einer oder mehrerer weiterer Komponenten wie z.B. der Fördereinheiten verwendet werden.

Die Verwendung der gemeinsamen (oder kombinierten) ersten Kühlmittelspeichereinrichtung sowie insbesondere auch der gemeinsamen (oder kombinierten) zweiten Kühlmittelspeichereinrichtung für alle einzelnen Versorgungspfade mit den Fördereinheiten gewährleistet, dass alle einzelnen Pumpen problemlos thermisch miteinander verbunden werden können. Gleichzeitig wird der Aufwand für die mechanische Verschaltung - gegenüber der Verwendung mehrerer einzelner erster bzw. zweiter Kühlmittelspeichereinrichtungen (z.B. Kühlmittelbehälter) - deutlich reduziert, da keine Ventilblöcke erforderlich sind. Außerdem entfällt die Notwendigkeit eines komplexen Überfüllungsüberwachungs- und Schutzkonzeptes mit einer komplexen Steuerungssoftware. All diese Maßnahmen stellen sicher, dass jeder an die Anlage angeschlossene Dipsenser jederzeit und unabhängig vom Betrieb einer einzelnen Fördereinheit zur Verfügung steht.

Die Verwendung der gemeinsamen ersten Kühlmittelspeichereinrichtung minimiert den Umgebungswärmeeintrag in den ersten Kühlmittelkreislauf mit dem ersten Kühlmittel, da die Gesamtoberfläche zur Umgebung hin durch die Verwendung der gemeinsamen ersten Kühlmittelspeichereinrichtung anstelle mehrerer kleiner, miteinander verbundener Kühlmittelspeichereinrichtungen oder Behälter erheblich reduziert wird. Dies erhöht den thermischen Gesamtwirkungsgrad der Anlage. Ein etwaiger verbleibender, geringer Wärmeeintrag kann durch die erwähnte Kühleinrichtung, z.B. ein integriertes kleines Kühlaggregat, kompensiert werden. Damit wird zum einen sichergestellt, dass die gemeinsame erste Kühlmittelspeichereinrichtung auf einer konstanten Temperatur gehalten werden kann, unabhängig vom Betrieb der Fördereinheiten. Dies ermöglicht eine bedarfsgerechte Bereitstellung des Mediums, z.B. durch Betankung. Andererseits wird der Gesamtverbrauch an Medium, insbesondere verflüssigtem Wasserstoff, gesenkt da der wiederkehrende Betrieb der Pumpen nicht mehr erforderlich ist, um die Temperatur des ersten (kalten) Kühlmittels aufrechtzuerhalten. Damit werden die Gesamtleistung und Effizienz der Anlage gesteigert.

Die Verwendung der gemeinsamen ersten Kühlmittelspeichereinrichtung und auch der gemeinsamen zweiten Kühlmittelspeichereinrichtung verringert zudem die Gesamtfläche der Anlage, also z.B. den Platzbedarf der Wasserstofftankstelle, insbesondere gegenüber der Verwendung mehrerer einzelner erster bzw. zweiter Kühlmittelspeichereinrichtungen.

Dabei sind das erste Kühlmedium und/oder das zweite Kühlmedium bevorzugt jeweils ein flüssiges Kühlmedium, also eine Kühlflüssigkeit. Der erste bzw. zweite Wärmetauscher sind dann entsprechend eingerichtet, Wärmeenergie zwischen dem Medium (z.B. Wasserstoff) und dem flüssigen ersten bzw. zweiten Kühlmedium zu transferieren. In der Kryotechnik können häufig sog. Lamellen-Wärmeübertrager (oder allgemein Luft-zu-Medium-Wärmeübertrager bzw. -Wärmetauscher) zum Einsatz kommen, die das kryogene Medium durch Wärmeeintrag aus der Umgebung verdampfen bzw. erwärmen. Durch den limitierten luftseitigen Wärmeübergang müssen diese typischerweise sehr groß ausgeführt werden. Zudem können die Lamellen einfrieren, was meist eine redundante Ausführung solcher Lamellen-Wärmeübertrager nach sich zieht. Die Verwendung von flüssigem Kühlmedium bzw. entsprechend eingerichteten Wärmeübertragern bzw. Wärmetauschern, also sog. Kälteträger-zu-Medium-Wärmeübertrager bzw. -Wärmetauscher verbessert gegenüber der Verwendung von Luft (oder anderem gasförmigen Kühlmedium) den Wärmeübergang und eliminiert gleichzeitig die Notwendigkeit einer redundanten Ausführung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

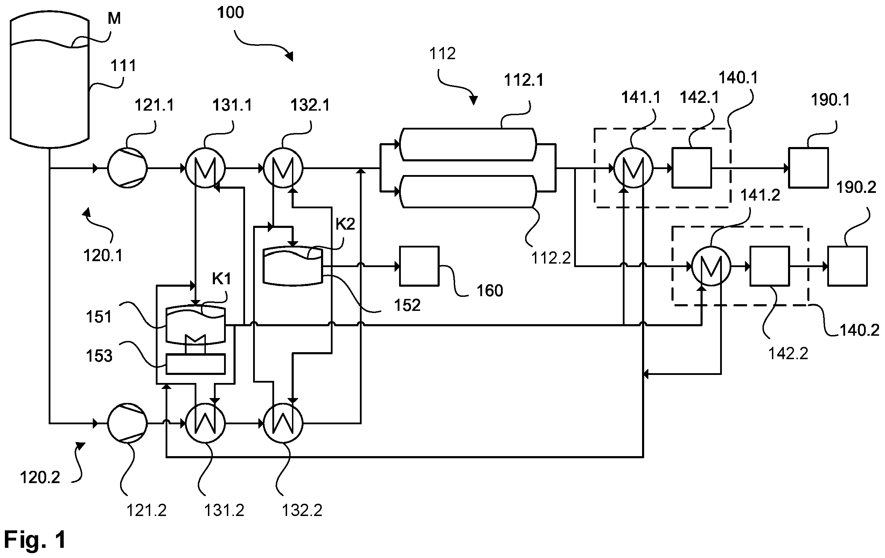

- Figur 1: zeigt schematisch eine erfindungsgemäße Anlage in einer bevorzugten Ausführungsform.

### Ausführliche Beschreibung der Zeichnung

In Figur 1 ist schematisch eine erfindungsgemäße Anlage 100 in einer bevorzugten Ausführungsform dargestellt, bei der auch ein erfindungsgemäßes Verfahren durchführbar ist. Die Anlage 100 dient zur Bereitstellung eines Mediums, z.B. Wasserstoff. Beispielhaft handelt es sich bei der Anlage um eine Wasserstofftankstelle.

Die Anlage weist eine erste Medienspeichereinrichtung 111, eine zweite Medienspeichereinrichtung 112 und beispielhaft zwei Dispenser 140.1, 140.2 auf. Bei der ersten Medienspeichereinrichtung 111 kann es sich insbesondere um einen Speichertank für verflüssigtes Medium M wie z.B. verflüssigten Wasserstoff oder anderes verflüssigtes Gas handeln. Wasserstoff kann dort z.B. bei ca. 3 bar und - 253°C gespeichert sein. Bei der zweiten Medienspeichereinrichtung 112 kann es sich um eine Hochdruckspeichereinrichtung handeln, sie kann z.B. eine oder mehrere Hochdruckspeicher für insbesondere gasförmiges Medium, z.B. Wasserstoff aufweisen; beispielhaft weist die zweite Medienspeichereinrichtung 112 zwei Hochdruckspeicher 112.1, 112.2 auf, die parallel betrieben werden können.

Jeder der beispielhaft zwei Dispenser 140.1, 140.2 wird aus der zweiten Medienspeichereinrichtung 112 mit Medium, z.B. Wasserstoff, versorgt, d.h. der Wasserstoff wird den Dispensern aus der zweiten Medienspeichereinrichtung 112 zugeführt. Der Dispenser 140.1 weist beispielhaft einen Dispenser-Wärmetauscher 141.1 und eine Betankungsschnittstelle 142.1 auf. Mittels des Dispenser-Wärmetauschers 141.1 kann das Medium auf eine gewünschte oder geforderte Temperatur, wie sie z.B. für einen Betankungsvorgang nötig ist, abgekühlt werden. Über die Betankungsschnittstelle 142.1 kann z.B. eine Verbindung zu einem zu betankenden Fahrzeug 190.1 bzw. dessen Tank hergestellt werden. Es versteht sich, dass der Dispenser 140.1 ggf. noch weitere Komponenten aufweisen kann, die für einen Betankungsvorgang nötig sind, die hier jedoch nicht relevant sind. Der Dispenser 140.2 weist beispielhaft einen Dispenser-Wärmetauscher 141.2 und eine Betankungsschnittstelle 142.2 auf, um ein Fahrzeug 190.2 betanken zu können. Die Funktionsweise des Dispensers 140.2 kann dabei derjenigen des Dispensers 140.1 entsprechen. Die Anlage 100 ist also eingerichtet, das Medium M aus der zweiten Medienspeichereinrichtung 112 jedem der mehreren Dispenser 140.1, 140.2 zuzuführen. Es versteht sich, dass auch weitere Dispenser dieser Art (oder auch anderer Art) vorgesehen sein könnten, die dann ebenfalls mit Medium aus der zweiten Medienspeichereinrichtung 112 versorgt und zur Betankung eines Fahrzeugs vorgesehen sein können. Es versteht sich, dass bei Bedarf z.B. auch nur einer der beiden gezeigten Dispenser verwendet werden kann, z.B. wenn einer der Dispenser defekt ist, gewartet werden muss oder aus anderen Gründen nicht verwendet werden soll. Ebenso kann bei mehr als zwei Dispensern auch eine beliebige Teilmenge davon verwendet werden.

Weiterhin umfasst die Anlage 100 mehrere Versorgungspfade, beispielhaft zwei Versorgungspfade 120.1, 120.2. Unter einem Versorgungspfad kann hierbei insbesondere eine separate Verbindung zwischen der ersten Medienspeichereinrichtung 111 und der zweiten Medienspeichereinrichtung 112 verstanden werden, über welche Medium aus der ersten Medienspeichereinrichtung 111 der zweiten Medienspeichereinrichtung 112 zugeführt werden kann. Jeder Versorgungspfad kann dabei an sich unabhängig von den anderen betrieben werden.

Für jeden der mehreren Versorgungspfade weist die Anlage 100 dabei jeweils eine Fördereinheit, z.B. eine Pumpe, insbesondere eine Kryopumpe, einen ersten Wärmetauscher sowie in einer Ausführungsform auch einen zweiten Wärmetauscher auf. In dem gezeigten Beispiel weist der Versorgungspfad 120.1 eine Fördereinheit 121.1, einen ersten Wärmetauscher 131.1 und einen zweiten Wärmetauscher 132.1 auf. Mittels der Fördereinheit 121.1 kann Medium M aus der ersten Medienspeichereinrichtung 111 über den ersten Wärmetauscher 131.1 und nachfolgend den zweiten Wärmetauscher 132.1 der zweiten Medienspeichereinrichtung 112 zugeführt werden. Weiterhin weist in dem gezeigten Beispiel der Versorgungspfad 120.2 eine Fördereinheit 121.2, einen ersten Wärmetauscher 131.2 und einen zweiten Wärmetauscher 132.2 auf. Mittels der Fördereinheit 121.2 kann Medium M aus der ersten Medienspeichereinrichtung 111 über den ersten Wärmetauscher 131.2 und nachfolgend den zweiten Wärmetauscher 132.2 der zweiten Medienspeichereinrichtung 112 zugeführt werden. Beide Versorgungspfade 120.1, 120.2 können also insbesondere gleichartig aufgebaut sein und auch parallel sowie gleichartig verwendet werden. Es versteht sich, dass auch weitere Versorgungspfade dieser Art vorgesehen sein könnten, die dann ebenfalls gleichartig und parallel zu den gezeigten Versorgungspfaden sein können.

Die Anlage 100 ist eingerichtet, das Medium M aus der ersten Medienspeichereinrichtung 111 über jeden der mehreren Versorgungspfade 120.1, 120.2 jeweils wie beschrieben der zweiten Medienspeichereinrichtung 112 zuzuführen. Es versteht sich, dass bei Bedarf z.B. auch nur einer der beiden gezeigten Versorgungspfade verwendet werden kann, z.B. wenn einer der Versorgungspfade defekt ist, gewartet werden muss oder aus anderen Gründen nicht verwendet werden soll. Ebenso kann bei mehr als zwei Versorgungspfaden auch eine beliebige Teilmenge davon verwendet werden.

Weiterhin weist die Anlage 100 für die mehreren Versorgungspfade, hier die zwei Versorgungspfade 120.1, 120.2, eine gemeinsame erste Kühlmittelspeichereinrichtung 151 mit einem ersten Kühlmedium K1 auf. Bei der ersten Kühlmittelspeichereinrichtung 112 kann es sich z.B. um einen Kühlmitteltank handeln. Die Anlage 100 ist eingerichtet, über die erste Kühlmittelspeichereinrichtung 151 jeden der ersten Wärmetauscher, hier also die ersten Wärmetauscher 131.1, 131.2, mit dem ersten Kühlmedium K1 zu versorgen. Hierunter ist insbesondere zu verstehen, dass das erste Kühlmedium K1 durch jeden der ersten Wärmetauscher 131.1, 131.2 geleitet wird, um das ebenfalls jeweils durch jeden der ersten Wärmetauscher 131.1, 131.2 geleitete bzw. geführte Medium M wie vorstehend schon beschrieben auf eine gewünschte Temperatur zu erwärmen. Wasserstoff als Medium kann hierbei z.B. auf ca. -90°C erwärmt werden, wodurch sich das erste Kühlmedium K1 auf z.B. ca. -43°C abkühlt. Es findet, wie in einem Wärmetauscher üblich, eine Wärmeübertragung statt. Wie bereits erwähnt, kommt bevorzugt ein flüssiges erstes Kühlmedium in Betracht. Beispielsweise eignen sich Gemische aus Wasser und Gefrierschutzmittel wie Glykol (z.B. Ethylenglykol, Propylenglykol, und dergleichen) oder Salzen (z.B. Kaliumformiat o.ä.).

In einer Ausführungsform ist die Anlage 100 auch eingerichtet, über die erste Kühlmittelspeichereinrichtung 151 jeden der mehreren Dispenser-Wärmetauscher, hier die Dispenser-Wärmetauscher 141.1, 141.2, mit dem ersten Kühlmedium K1 zu versorgen. Hierunter ist insbesondere ebenfalls zu verstehen, dass das erste Kühlmedium K1 durch jeden der Dispenser-Wärmetauscher 141.1, 141.2 geleitet wird, um das ebenfalls jeweils durch jeden der Dispenser-Wärmetauscher 141.1, 141.2 geleitete bzw. geführte Medium M wie vorstehend schon beschrieben auf eine gewünschte Temperatur für die Betankung abzukühlen. Wasserstoff als Medium kann hierbei z.B. auf ca. -40°C abgekühlt werden. Es findet, wie in einem Wärmetauscher üblich, eine Wärmeübertragung statt.

In einer Ausführungsform weist die Anlage 100 auch eine Kühleinrichtung 153 auf, mittels welcher das erste Kühlmedium K1 in der ersten Kühlmittelspeichereinrichtung 151 gekühlt wird. Bei der Kühleinrichtung 153 kann es sich z.B. um ein integriertes kleines Kühlaggregat handeln mit dem ein etwaiger verbleibender, geringer Wärmeeintrag, z.B. aus der Umgebung, kompensiert werden kann.

Weiterhin weist die Anlage 100, in einer Ausführungsform, für die mehreren Versorgungspfade, hier die zwei Versorgungspfade 120.1, 120.2, eine gemeinsame zweite Kühlmittelspeichereinrichtung 152 mit einem zweiten Kühlmedium K2 auf. Bei der zweiten Kühlmittelspeichereinrichtung 152 kann es sich z.B. um einen Kühlmitteltank handeln. Die Anlage 100 ist eingerichtet, über die zweite Kühlmittelspeichereinrichtung 152 jeden der zweiten Wärmetauscher, hier also die zweiten Wärmetauscher 132.1, 132.2, mit dem zweiten Kühlmedium K2 zu versorgen.

Hierunter ist insbesondere zu verstehen, dass das zweite Kühlmedium K2 durch jeden der zweiten Wärmetauscher 132.1, 132.2 geleitet wird, um das ebenfalls jeweils durch jeden der zweiten Wärmetauscher 132.1, 132.2 geleitete bzw. geführte Medium M wie vorstehend schon beschrieben auf eine gewünschte Temperatur zu erwärmen. Wasserstoff als Medium kann hierbei z.B. auf ca. Raumtemperatur erwärmt werden; das zweite Kühlmedium K2 kann dabei auf z.B. ca. 20°C gehalten werden. Es findet, wie in einem Wärmetauscher üblich, eine Wärmeübertragung statt. Wie bereits erwähnt, kommt bevorzugt ein flüssiges zweites Kühlmedium in Betracht. Beispielsweise eignen sich Gemische aus Wasser und Gefrierschutzmittel wie Glykol (z.B. Ethylenglykol, Propylenglykol, und dergleichen) oder Salzen (z.B. Kaliumformiat o.ä.).

Sowohl für das erste als auch das zweite Kühlmedium gilt, dass insbesondere sog. Kälteträger als das Kühlmedium eingesetzt werden, welche eine möglichst niedrige, untere Einsatztemperatur haben.

In einer Ausführungsform ist die Anlage 100 auch eingerichtet, das zweite Kühlmedium K2 aus der zweiten Kühleinrichtung 152 zum Kühlen einer oder mehrerer weiterer Komponenten zu verwenden; beispielhaft und stellvertretend sind solche Komponenten hier mit 160 bezeichnet. So können als die Komponenten z.B. die Fördereinheiten 121.1, 121.2 oder Teile davon (z.B. Elektronik, Hydraulik) auf diese Weise effizient gekühlt werden.

## Patentansprüche

**1.** Verfahren zum Bereitstellen eines Mediums (M), insbesondere Wasserstoff, wobei das Medium (M) aus einer ersten Medienspeichereinrichtung (111) über mehrere Versorgungspfade (120.1, 120.2) einerzweiten Medienspeichereinrichtung (112) zugeführt wird, wobei das Medium (M) aus der zweiten Medienspeichereinrichtung (112) einem oder mehreren Dispensern (140.1, 140.2) zur Bereitstellung des Mediums, insbesondere zur Betankung eines Fahrzeugs (190.1, 190.2), zugeführt wird,
wobei in jedem der mehreren Versorgungspfade jeweils mittels einer Fördereinheit (121.1, 121.2) Medium aus der ersten Medienspeichereinrichtung (11) über einen jeweiligen ersten Wärmetauscher (131.1, 131.2) der zweiten Medienspeichereinrichtung (112) zugeführt wird, und
wobei über eine gemeinsame erste Kühlmittelspeichereinrichtung (151) jeder der ersten Wärmetauscher (131.1, 131.2) mit einem ersten, insbesondere flüssigen, Kühlmedium (K1) versorgt wird.

**2.** Verfahren nach Anspruch 1, wobei das Medium (M) von der zweiten Medienspeichereinrichtung (112) über einen Dispenser-Wärmetauscher dem einem oder über jeweils einen von mehreren Dispenser-Wärmetauschern (141.1, 141.2) den mehreren Dispensern zur Bereitstellung zugeführt wird.

**3.** Verfahren nach Anspruch 2, wobei über die erste Kühlmittelspeichereinrichtung (151) weiterhin der eine oder jeder der mehreren Dispenser-Wärmetauscher (141.1, 141.2) mit dem ersten Kühlmedium (K1) versorgt wird.

**4.** Verfahren nach einem der vorstehenden Ansprüche, wobei weiterhin mittels einer Kühleinrichtung (153) das erste Kühlmedium (K1) in der ersten Kühlmittelspeichereinrichtung (151) gekühlt wird.

**5.** Verfahren nach einem der vorstehenden Ansprüche, wobei in jedem der mehreren Versorgungspfade (120.1, 120.2) jeweils mittels der Fördereinheit Medium aus der ersten Medienspeichereinrichtung (111) über den jeweiligen ersten Wärmetauscher (131.1,131.2) und nachfolgend einen jeweiligen zweiten Wärmetauscher (132.1, 132.2) der zweiten Medienspeichereinrichtung (112) zugeführt wird, und
wobei über eine gemeinsame zweite Kühlmittelspeichereinrichtung (152) jeder der zweiten Wärmetauscher (132.1, 132.2) mit einem zweiten, insbesondere flüssigen, Kühlmedium (K2) versorgt wird.

**6.** Verfahren nach Anspruch 5, wobei das zweite Kühlmedium (K2) aus der zweiten Kühleinrichtung weiterhin zum Kühlen einer oder mehrerer weiterer Komponenten, insbesondere der Fördereinheiten, verwendet wird.

**7.** Verfahren nach Anspruch 5 oder 6, wobei das erste Kühlmedium (K1) mit einer niedrigeren Temperatur als das zweite Kühlmedium (K2) verwendet wird.

**8.** Verfahren nach einem der vorstehenden Ansprüche, wobei das Medium (M) in der ersten Speichereinrichtung (111) in verflüssigter Form gespeichert wird.

**9.** Verfahren nach einem der vorstehenden Ansprüche, wobei Wasserstoff als Medium (M) verwendet wird.

**10.** Anlage (100) zur Bereitstellung eines Mediums (M), insbesondere Wasserstoff, wobei die Anlage (100) eine erste Medienspeichereinrichtung (111) eine zweite Medienspeichereinrichtung (112) und einen oder mehrere Dispenser (140.1, 140.2) aufweist,
wobei die Anlage (100) mehrere Versorgungspfade (120.1, 120.2) umfasst und für jeden der mehreren Versorgungspfade jeweils eine Fördereinheit (121.1, 121.2) und einen ersten Wärmetauscher aufweist,
wobei die Anlage (100) eingerichtet ist, das Medium aus der ersten Medienspeichereinrichtung (111) über jeden der mehreren Versorgungspfade jeweils mittels der Fördereinheit über jeweils den ersten Wärmetauscher der zweiten Medienspeichereinrichtung (112) zuzuführen,
wobei die Anlage (100) eingerichtet ist, das Medium aus der zweiten Medienspeichereinrichtung (112) dem einen oder jedem der mehreren Dispenser (140.1, 140.2) zur Bereitstellung, insbesondere zur Betankung eines Fahrzeugs, zuzuführen,
wobei die Anlage (100) für die mehreren Versorgungspfade eine gemeinsame erste Kühlmittelspeichereinrichtung (151) mit einem ersten, insbesondere flüssigen, Kühlmedium aufweist, und wobei die Anlage eingerichtet ist, über die erste Kühlmittelspeichereinrichtung jeden der ersten Wärmetauscher mit dem ersten Kühlmedium zu versorgen.

**11.** Anlage (100) nach Anspruch 10, die für jeden der mehreren Versorgungspfade weiterhin jeweils einen zweiten Wärmetauscher (132.1, 132.2) aufweist,
wobei die Anlage (100) eingerichtet ist, das Medium aus der ersten Medienspeichereinrichtung über jeden der mehreren Versorgungspfade jeweils mittels der Fördereinheit über jeweils den ersten Wärmetauscher und nachfolgend jeweils den zweiten Wärmetauscher der zweiten Medienspeichereinrichtung zuzuführen,
wobei die Anlage (100) für die mehreren Versorgungspfade eine gemeinsame zweite Kühlmittelspeichereinrichtung (152) mit einem zweiten, insbesondere flüssigen, Kühlmedium aufweist, und wobei die Anlage eingerichtet ist, über die zweite Kühlmittelspeichereinrichtung jeden der zweiten Wärmetauscher mit dem zweiten Kühlmedium zu versorgen.

**12.** Anlage (100) nach Anspruch 10 oder 11, die dazu eingerichtet ist, ein Verfahren nach einem der Ansprüche 1 bis 9 durchzuführen.

**13.** Anlage (100) nach einem der Ansprüche 10 bis 12, die die als Wasserstofftankstelle ausgebildet ist.

**15.** Verwendung einer Anlage (100) nach einem der Ansprüche 10 bis 12 zum Betanken eines Fahrzeugs mit Wasserstoff als Medium.
